Europäisches Patentamt

European Patent Office

Office européen des brevets

(11) Veröffentlichungsnummer: **0 508 202 A1**

# EUROPÄISCHE PATENTANMELDUNG

(21) Anmeldenummer: **92104969.8**

(51) Int. Cl.5: **B25J 9/16**

(22) Anmeldetag: **23.03.92**

(30) Priorität: **09.04.91 DE 4111354**

(43) Veröffentlichungstag der Anmeldung:
**14.10.92 Patentblatt 92/42**

(84) Benannte Vertragsstaaten:
**AT BE CH DE ES FR GB GR IT LI NL PT SE**

(71) Anmelder: **Bodenseewerk Gerätetechnik GmbH**
**Alte Nussdorfer Strasse 15 Postfach 1120**
**W-7770 Überlingen/Bodensee(DE)**

(72) Erfinder: **Krogmann, Uwe**
**Zur Äsche 24**
**W-7770 Überlingen(DE)**

(74) Vertreter: **Weisse, Jürgen, Dipl.-Phys. et al**
**Patentanwälte Dipl.-Phys. Jürgen Weisse**
**Dipl.-Chem. Dr. Rudolf Wolgast Bökenbusch**
**41 Postfach 11 03 86**
**W-5620 Velbert 11 Langenberg(DE)**

(54) **Einrichtung zur Führung des Endeffektors eines Roboters längs einer Sollbahn.**

(57) Zur Führung des Endeffektors eines Roboters längs einer Sollbahn sind Mittel zur Vorgabe von Bahnparametern der Sollbahn und Mittel (10) zur Bildung von arbeitsraumbezogenen (z.B. kartesischen) Führungsgrößen aus den die Sollbahn definierenden Bahnparametern vorgesehen. Auf einen Roboterregler (12) sind die Führungsgrößen aufgeschaltet. Dieser schaltet seinerseits Stellgrößen auf Momentengeber des Roboters (18) auf. Durch eine Rückführschleife (24) ist der Istzustand des Roboters (18) auf die Eingangsseite des Roboterreglers (12) rückführbar. Der Roboterregler (12) enthält wenigstens ein trainierbares neuronales Netzwerk (26,28,30). Auf ein prädiktives Robotermodell (58) ist von einem mit wenigstens einem neuronalen Netzwerk aufgebauten, mit den Führungsgrößen beaufschlagten Regler (54) eine "geplanten Stellgröße" aufschaltbar. Durch das Robotermodell ist ein prädizierter Zustand berechenbar. Der prädizierte Zustand wird durch das neuronale Netzwerk des besagten Reglers (54) mit dem Istzustand des Roboters (18) verglichen. Das neuronale Netzwerk des besagten Reglers (54) enthält Mittel zur Beeinflussung dieses neuronalen Netzwerkes nach Maßgabe der Abweichung zwischen prädiziertem Zustand und Istzustand des Roboters (18).

Fig.3

EP 0 508 202 A1

Die Erfindung betrifft eine Einrichtung zur Führung des Endeffektors eines Roboters längs einer Sollbahn, enthaltend

(a) Mittel zur Vorgabe von Bahnparametern der Sollbahn,

(b) Mittel zur Bildung von arbeitsraumbezogenen (z.B. kartesischen) Führungsgrößen aus den die Sollbahn definierenden Bahnparametern,

(d) Reglermittel, auf welchen die Führungsgrößen aufgeschaltet sind und welche ihrerseits Stellgrößen auf Momentengeber des Roboters aufschaltet, und

(e) eine Rückführschleife, durch welche der Istzustand des Roboters auf die Eingangsseite der Reglermittel rückführbar sind.

Mechanisch können Roboter als eine Kette kinematischer Elemente dargestellt werden, die unter Rechnerkontrolle programmierte Bewegungen ausführen. Dadurch sollen mittels eines "Endeffektors" an den im Arbeitsbereich des Roboters vorhandenen Elementen bestimmte Manipulationen durchgeführt werden. Der Endeffektor kann dabei ein Werkzeug sein. Es kann sich aber auch um eine Meßeinrichtung, z.B. ein Gewindemeßgerät, handeln. Die Bewegungen des Endeffektors sind dabei im allgemeinen in einem arbeitsraumbezogenen Koordinatensystem beschrieben. In der Regel ist das ein kartesisches Koordinatensystem. Letztendlich erfolgt die Bahnführung des Roboters jedoch in einem roboterfesten Koordinatensystem, dem "Gelenkraum", in dem die Momentengeber der Achsen als Stellmotoren angeordnet sind.

Die Regelung der Roboterbewegungen erfordert daher die Lösung eines inversen dynamischen Problems, und zwar für ein komplexes, nichtlineares und zeitvariantes System, in Echtzeit. Man kann zwar relativ leicht angeben, wie sich Stellgrößen, die auf die Momentengeber des Roboters aufgeschaltet werden, auf die Bewegungen des Roboters auswirken. Das Problem ist aber, zu vorgegebenen Bewegungen die dafür erforderlichen Stellgrößen zu bestimmen.

Hierfür wurden verschiedene Lösungen erarbeitet, bei denen die inverse Roboterdynamik berechnet und die unbekannten und variablen Roboterparameter identifiziert werden müssen. Wegen der inhärenten mathematischen Komplexität der Roboter-Modellierung erfordern derartige Lösungen aufwendige Echtzeit-Signalverarbeitungseinheiten und umfangreiche, sicherheitskritische Software.

In einer Veröffentlichung von Martinetz et al. "Three-Dimensional Neural Net for Learning Visumotor Coordination of a Robot Arm" in "IEEE Transactions on Neural Networks", Bd. 1 (1990), Seiten 131-136 ist ein Roboterregler mit einem neuronalen Netz bekannt. Dabei soll ein Roboter ein Objekt ergreifen, das durch zwei Videokameras beobachtet wird. Die Signale der Videokameras werden auf ein neuronales Netz aufgeschaltet. Das neuronale Netz liefert Steuerbefehle an den Roboter. In einem Lernprozeß wird durch Variation der Gewichte des neuronalen Netzes in Abhängigkeit vom Grad des Erfolges der Steueroperation erreicht, daß der Roboter lernt, sich zu dem von den Kameras beobachteten Objekt hinzubewegen. In welcher Weise das geschieht und mit welchen Geschwindigkeiten und Bahnparametern spielt dort keine Rolle.

Aus einer Veröffentlichung von W.Thomas Miller et al. "Teal-Time Dynamic Control of an Industrial Manipulator Using a Neural-Network-Based Learning Controller" in "IEEE Transactions on Robotics and Automation" Bd. 6 (1990) Seiten 1-9 sind Mittel zur Vorgabe von Bahnparametern der Sollbahn vorgesehen. Diese liefern einen Vektor von Sollzuständen des Systems. Das sind die Führungsgrößen. Über eine inverse Kinematik und Dynamik wird der Roboter konventionell angesteuert. Eine Verstärkungsregelung erhält ein Rückführsignal vom Roboter. Parallel erhält der Roboter noch überlagerte Steuersignalein Form eines Vektors über ein neuronales Netz. Von der Differenz einer Funktion des Istwertes der Roboterbewegung und des Vektors wird der Gewichtsvektor des neuronalen Netzes nach einem bestimmten Algorithmus korrigiert. Das ist ein Trainieren des neuronalen Netzes.

Der Erfindung liegt die Aufgabe zugrunde, eine Einrichtung der eingangs genannten Art mit einfacheren Mitteln aufzubauen.

Der Erfindung liegt weiter die Aufgabe zugrunde, die Bahnführung und Regelung eines Roboters zu verbessern.

Erfindungsgemäß wird diese Aufgabe dadurch gelöst, daß

(f) ein prädiktives Robotermodell vorgesehen ist, auf welches von den mit wenigstens einem neuronalen Netzwerk aufgebauten, mit den Führungsgrößen beaufschlagten Reglermitteln eine "geplante Stellgröße" aufschaltbar ist und durch welches ein prädizierter Zustand berechenbar ist,

(g) der prädizierte Zustand durch das neuronale Netzwerk der besagten Reglermittel mit dem Istzustand des Roboters verglichen wird und

(h) das neuronale Netzwerk der besagten Reglermittel Mittel zur Beeinflussung dieses neuronalen Netzwerkes nach Maßgabe der Abweichung zwischen prädiziertem Zustand und Istzustand des Roboters enthält.

Es wird somit eine Architektur zur Modellierung und Regelung eines Roboters unter Verwendung neuronaler Netzwerke vorgesehen. Dabei wird von der Fähigkeit neuronaler Netzwerke zu lernen, Daten zu assoziieren und sich selbst zu organisieren Gebrauch gemacht, um die Zusammenhänge zwischen Variablen zu erfassen und zu speichern, ohne die analytischen Beziehungen im einzelnen zu kennen. Weiterhin ist die inhärente Redundanz neuronaler Netzwerke ein wichtiger Aspekt der Betriebssicherheit.

Auf diese Weise kann das "off-line" trainierte neuronale Netzwerk der Reglermittel im Betrieb ("on-line") an Veränderungen der Kinematik oder Dynamik des Roboters angepaßt werden. Der prädiktive Regelzweig enthält als Element ein prädiktives Robotermodell. Das Robotermodell ist ebenfalls als neuronales Netzwerk oder in Form einer Mehrzahl funktionell getrennter Netzwerke aufgebaut. Zur Realisierung dieses Netzwerkes kommen jedoch nur Netzwerk-Modelle infrage, die nach "off-line" Training unüberwacht "on-line" weiterzulernen vermögen. Das gilt auch für die Reglermittel in dem prädiktiven Regelzweig.

Mit Hilfe des prädiktiven Regelzweiges wird ausgehend von der Führungsgröße der bevorstehende Istzustand des realen Roboters prädiziert. Durch Vergleich mit dem tatsächlich auftretenden Istzustand werden erforderlichenfalls das Robotermodell und das neuronale Netzwerk der Reglermittel im Prädikationszweig angepaßt. Diese On-line-Adaption in dem prädiktiven Regelzweig wird auf das neuronale Netzwerk der Reglermittel übertragen. Dadurch werden die Reglermittel entsprechend adaptiert.

Die Eigenschaft der Generalisierung sowie das globale Assoziationsvermögen neuronaler Netzwerke kommt der Anwendung bei Robotern insofern zugute, als die prinzipiell sehr große Zahl von Variablenmustern nicht komplett trainiert, d.h. gelernt, zu werden braucht. Der Lernaufwand wird auch durch Aufteilung der Modellierungsfunktion auf verschiedene Netzwerke erheblich reduziert. Das entspricht einer Aufteilung des an sich großen Eingangs- und Ausgangsvektorraumes auf Unterräume mit entsprechend geringerer Zahl von Elementen.

Ausgestaltungen der Erfindung und ein Verfahren zum Trainieren der neuronalen Netzwerke bei einer solchen Vorrichtung sind Gegenstand der Patentansprüche 2 bis 5.

Ein Ausführungsbeispiel dar Erfindung ist nachstehend unter Bezugnahme auf die zugehörigen Zeichnungen näher erläutert.

Fig. 1   dient der Erläuterung der Regelung eines Roboters.

Fig.2   ist ein Blockdiagramm und zeigt das überwachte Lernen des neuronalen Netzwerkes in dem Roboterregler.

Fig.3   ist ein Blockdiagramm und zeigt die Architektur zur Modellierung und Regelung eines Roboters.

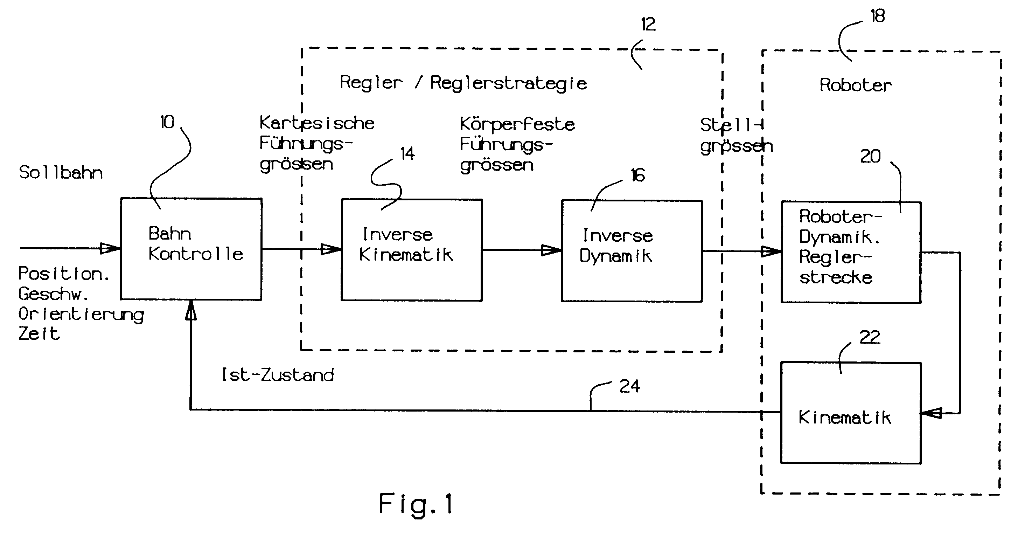

Fig.1 zeigt eine dynamisch exakte Regelung eines Roboters. Es wird eine "Sollbahn" des Endeffektors des Roboters vorgegeben, die durch die Aufgabe des Roboters bestimmt ist. Diese Sollbahn ist in dem kartesischen Arbeitsraum des Roboters bestimmt. Der Endeffektor soll zu einem bestimmten Zeitpunkt mit einer vorgegebenen Geschwindigkeit und einer vorgegebenen Orientierung eine bestimmte Endposition erreichen. Dazu muß eine Bahn im Zustandsraum bestimmt werden, die ausgegend von einem gegebenen Anfangszustand zu dem gewünschten Endzustand führt. Die Bahnparameter sind in bezug auf den kartesischen Arbeitsraum definiert. Die Bahnparameter gestatten die Bildung von kartesischen, also auf den Arbeitsraum bezogenen Führungsgrößen. Das ist in Fig. 1 durch Block 10 dargestellt.

Ein Block 12 symbolisiert den Roboterregler und die Regelstrategie, wie sie bei dynamisch exakter Regelung des Roboters angewandt würden.

Die Führungsgrößen sind auf einen Block "Inverse Kinematik" aufgeschaltet, der mit 14 bezeichnet ist. Die Bewegungen des Roboters erfolgen nicht in kartesischen Koordinaten sondern um die verschiedenen Achsen des Roboters. Es müssen also die Winkel und Winkelgeschwindigkeiten um die verschiedenen Achsen des Roboters bestimmt werden, die rein kinematisch den durch die Führungsgrößen bestimmten Bewegungen des Endeffektors des Roboters zugeordnet sind. Wenn diese Winkel und Winkelgeschwindigkeiten bestimmt sind, müssen die Ansteuersignale für die um die verschiedenen Achsen wirksamen Momentengeber des Roboters (Stellgrößen) bestimmt werden, durch welche diese Winkel und Winkelgeschwindigkeiten erzielt werden. Das ist durch den mit 16 bezeichneten Block "Inverse Dynamik" dargestellt.

Der Roboterregler 12 liefert somit Stellgrößen für den Roboter, der durch einen Block 18 dargestellt ist. In dem Roboter 18 werden die Momentengeber mit den Stellgrößen angesteuert. Die Momentengeber führen Bewegungen entsprechend der Dynamik des Roboters 18 aus. Das ist durch Block 20 dargestellt. Die Bewegung der Momentengeber um die verschiedenen Achsen des Roboters 18 führt zu einer Bewegung des Endeffektors (z.B. eines Werkzeugs) in kartesischen Koordinaten entsprechend der Kinematik des Roboters, die durch Block 22 dargestellt ist. Eine Rückführschleife 24 ist zur Eingangsseite des Roboterreglers geführt, so daß ein geschlossener Regelkreis entsteht.

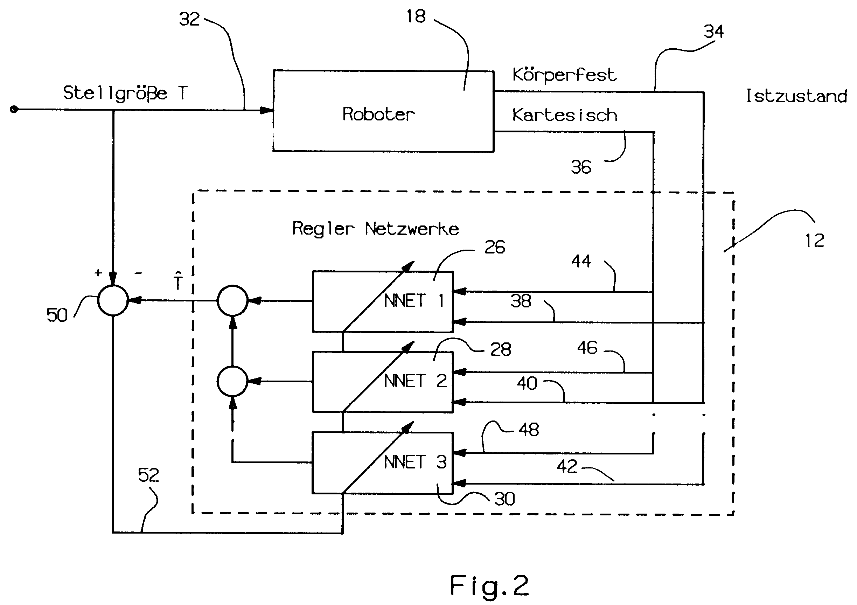

Die algorithmische Modellierung der inversen Kinematik und der inversen Dynamik des Roboters 18 ist sehr aufwendig. Deshalb wird ein Roboterregler 12 benutzt, der mit neuronalen Netzwerken 26, 28 und 30 aufgebaut ist und entsprechend Fig.2 "off-line" trainiert werden kann.

Der Roboterregler 12 enthält eine Mehrzahl von getrennten Netzwerken. In Fig.2 sind drei solcher getrennter Netzwerke dargestellt. Dadurch läßt sich der Lernaufwand erheblich reduzieren. Die Ausgänge der drei Netzwerke 26, 28 und 30 sind additiv miteinander verknüpft. Man kann sich das -stark vereinfacht- wie eine verallgemeinerte PID-Struktur vorstellen.

Der Roboterregler 12 wird zunächst "off-line" trainiert. Zu diesem Zweck werden auf den Roboter 18 verschiedene Stellgrößen T aufgeschaltet. Das ist durch Pfeil 32 in Fig.2 dargestellt. Der Roboter 18 liefert zugeordnete roboterfeste und kartesische Bewegungen. Die roboterfesten Bewegungen sind Drehbewegungen um die verschiedenen Achsen des Roboters 18. Die kartesischen Bewegungen sind Bewegungen des Endeffektors im Arbeitsraum des Roboters 18. Diese Bewegungen werden erfaßt. Das ist durch die Ausgänge 34 bzw. 36 des Roboters 18 in Fig.2 dargestellt. Die Ausgangsinformationen an den Ausgängen 34 und 36 sind parallel auf die drei neuronalen Netzwerke 26, 28 und 30 aufgeschaltet. Das ist durch die Pfeile 38, 40 und 42 bzw. 44, 46 und 48 in Fig.2 dargestellt.

Die neuronalen Netzwerke 26, 28 und 30 liefern Schätzwerte T für die Stellgrößen. Diese Schätzwerte T für die Stellgrößen T werden mit den tatsächlichen Stellgrößen T verglichen, was in Fig.2 durch eine Summierpunkt 50 dargestellt ist. Bei Abweichungen werden die neuronalen Netzwerke 26, 28 und 30 entsprechend verändert. Das ist in Fig.2 durch die Stellschleife 52 angedeutet ist.

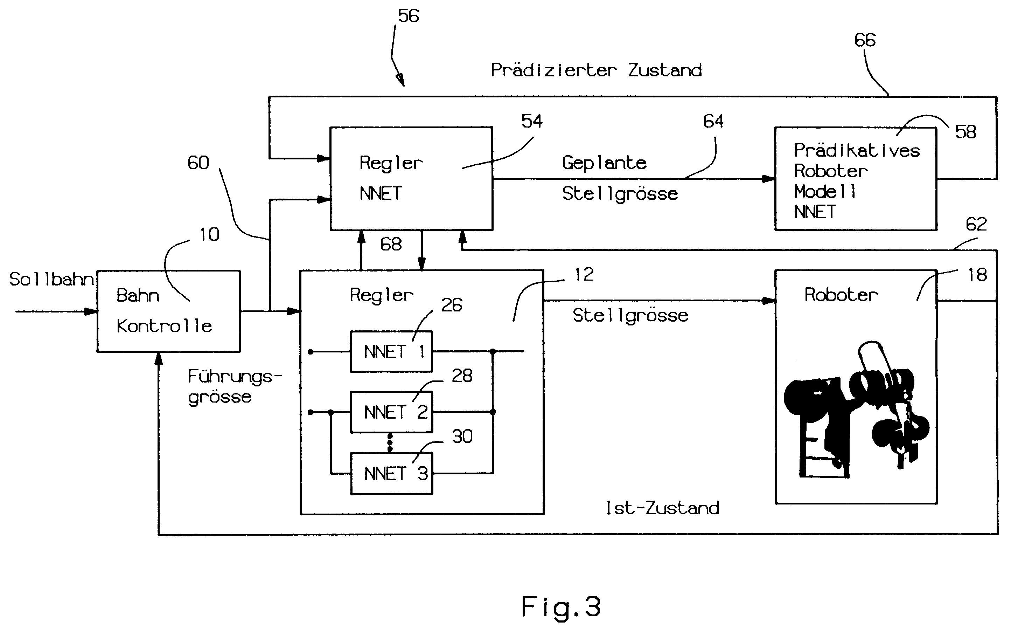

In Fig.3 ist die Architektur zur Modellierung und Regelung des Roboters 18 dargestellt. Der Roboterregler 12 ist in der beschriebenen Weise trainiert worden. In gleicher Weise trainiert worden ist auch ein im wesentlichen mit dem Roboterregler übereinstimmender Regler 54 eines prädiktiven Regelzweiges 56. Der prädiktive Regelzweig 56 enthält den Regler 54 sowie ein prädiktives Robotermodell 58. Der Regler 54 wie das Robotermodell 58 sind mit neuronalen Netzwerken aufgebaut und ähnlich wie der Roboterregler 12 off-line trainiert.

Der Regler 54 des prädiktiven Regelzweiges erhält einmal die kartesische Führungsgröße, die auch auf den Roboterregler 12 aufgeschaltet ist, und zum anderen den tatsächlichen Istzustand des Roboters 18. Das ist durch die Pfeile 60 bzw. 62 in Fig.3 dargestellt. Der Regler 54 liefert eine "geplante Stellgröße" an das als neuronales Netzwerk ausgebildete prädiktive Robotermodell 58. Das ist durch Pfeil 64 in Fig.3 dargestellt. Das prädiktive Robotermodell 58 liefert daraus einen prädizierten Zustand. Der prädizierte Zustand ist in einer Schleife 66 auf den Regler 54 zurückgeführt. Es wird der prädizierte Zustand mit dem tatsächlichen Zustand des Roboters 18 verglichen. Bei einer Abweichung erfolgt eine Adaption des Reglers 54 und ggf. des prädiktiven Robotermodells 58.

Die Adaption des Reglers 54 wird durch einen Datenaustausch, der durch die Pfeile 68 angedeutet ist, auf den Roboterregler 12 übertragen.

Auf diese Weise "lernt" das System auch online im tatsächlichen Betrieb weiter.

**Patentansprüche**

1. Einrichtung zur Führung des Endeffektors eines Roboters längs einer Sollbahn, enthaltend

   (a) Mittel zur Vorgabe von Bahnparametern der Sollbahn,

   (b) Mittel (10) zur Bildung von arbeitsraumbezogenen (z.B. kartesischen) Führungsgrößen aus den die Sollbahn definierenden Bahnparametern,

   (d) Reglermittel (12,54), auf welche die Führungsgrößen aufgeschaltet sind und welcher seinerseits Stellgrößen auf Momentengeber des Roboters (18) aufschaltet, und

   (e) eine Rückführschleife (24), durch welche der Istzustand des Roboters (18) auf die Eingangsseite der Reglermittel (12,54) rückführbar ist,

   **dadurch gekennzeichnet, daß**

   (f) ein prädiktives Robotermodell (58) vorgesehen ist, auf welches von den mit wenigstens einem neuronalen Netzwerk aufgebauten, mit den Führungsgrößen beaufschlagten Reglermitteln (12,54) eine "geplante Stellgröße" aufschaltbar ist und durch welches ein prädizierter Zustand berechenbar ist,

   (g) der prädizierte Zustand durch das neuronale Netzwerk der besagten Reglermittel (12,54) mit dem Istzustand des Roboters (18) verglichen wird und

   (h) das neuronale Netzwerk der besagten Reglermittel (12, 54) Mittel zur Beeinflussung dieses neuronalen Netzwerkes nach Maßgabe der Abweichung zwischen prädiziertem Zustand und Istzustand des Roboters (18) enthält.

2. Einrichtung nach Anspruch 1, **dadurch gekennzeichnet, daß** die Reglermittel

   - einen den Roboter (18) selbst ansteuernden ersten Regler (12) und

   - einen das prädiktive Robotermodell (18) mit der geplanten Stellgröße ansteuernden zweiten Regler (54) aufweisen und

   - die Regler (12,54) miteinander im Sinne einer Anpassung ihrer Parameter in Datenaustausch stehen.

4. Einrichtung nach Anspruch 1 oder 2, **dadurch gekennzeichnet, daß** das prädiktive Robotermodell (58) durch ein neuronales Netzwerk dargestellt ist.

5. Einrichtung nach einem der Ansprüche 1 bis 3, **dadurch gekennzeichnet, daß** die neuronalen Netzwerke von je einer Mehrzahl getrennter Netzwerkmodule gebildet ist.

**6.** Verfahren zum Trainieren des Roboterreglers bei einer Einrichtung nach Anspruch 1, **dadurch gekennzeichnet, daß**

(a) auf den Roboter verschiedene Stellgrößen aufgeschaltet werden,

(b) auf die Reglermittel der Istzustand des Roboters einmal in arbeitsraumbezogenen und zum anderen in roboterbezogenen Koordinaten aufgeschaltet wird,

(c) die Reglermittel daraus einen Schätzwert der jeweiligen Stellgröße berechnet,

(d) die Schätzwerte der Stellgröße mit der tatsächlichen Stellgröße verglichen werden und

(e) als Ergebnis dieses Vergleichs Parameter des neuronalen Netzwerkes der Reglermittel verändert werden.

Fig.1

Fig.2

Stellgröße T

Roboter

Körperfest

Kartesisch

Istzustand

Regler Netzwerke

NNET 1

NNET 2

NNET 3

$\hat{T}$

EP 0 508 202 A1

56 Prädizierter Zustand

66

54 Regler NNET

64 Geplante Stellgrösse

58 Prädikatives Roboter Modell NNET

60

10 Bahn Kontrolle

Sollbahn

Führungs-grösse

68

12 Regler

26 NNET 1

28 NNET 2

30 NNET 3

62

18 Roboter

Stellgrösse

Ist-Zustand

EP 0 508 202 A1

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | IEEE FIRST INTERNATIONAL CONFERENCE ON NEURAL NETWORKS<br>24. Juni 1987, SAN DIEGO,CALIFORNIA,US<br>Seiten 567 - 572;<br>ALLON GUEZ ET AL: 'NEUROMORPHIC ARCHITECTURE FOR ADAPTIVE ROBOT CONTROL: A PRELIMINARY ANALYSIS'<br>* Seite 569, Absatz 2 - Seite 571, Absatz 6 *<br>* Abbildung 1 *<br>--- | 1,2,4,6 | B25J9/16 |
| A | PROCEEDINGS OF THE 28TH IEEE CONFERENCE ON DECISION AND CONTROL<br>15. Dezember 1989, TAMPA,FLORIDA,US<br>Seiten 1754 - 1758;<br>J.W.SELINSKY ET AL: 'THE ROLE OF A PRIORI KNOWLEDGE OF PLANT DYNAMICS IN NEUROCONTROLLER DESIGN'<br>* Seite 1754, linke Spalte, Absatz 1 - Seite 1755, rechte Spalte, Absatz 6 *<br>* Abbildungen 1.1,2.1 *<br>--- | 1,5,6 | |
| A | 1989 IEEE INTERNATIONAL CONFERENCE ON SYSTEMS,MAN, AND CYBERNETICS<br>17. November 1989, CAMBRIDGE,MASSACHUSETTS,US<br>Seiten 327 - 329;<br>S.K.SINGH ET AL: 'A NEURAL NETWORK APPROACH TO POINTWISE CONTROL OF ROBOT MANIPULATORS'<br>* Seite 328, linke Spalte, Absatz 1 - Seite 328, rechte Spalte, letzter Absatz *<br>* Abbildung 4 *<br><br>----- | 1,6 | RECHERCHIERTE SACHGEBIETE (Int. Cl.5 )<br><br>B25J |

Der vorliegende Recherchenbericht wurde für alle Patentansprüche erstellt

| Recherchenort | Abschlußdatum der Recherche | Prüfer |
|---|---|---|
| DEN HAAG | 25 JUNI 1992 | NETTESHEIM J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.........................................................
& : Mitglied der gleichen Patentfamilie, übereinstimmendes Dokument

EPO FORM 1503 03.82 (P0403)